# EUROPÄISCHE PATENTSCHRIFT

(11) **EP 1 132 719 B1**
(45) Veröffentlichungstag und Bekanntmachung des Hinweises auf die Patenterteilung: **01.06.2005**
(21) Anmeldenummer: 01104953.3
(22) Anmeldetag: 01.03.2001
(51) Int. Cl.: G01D 5/347, G01B 11/02

(54) **Reflexions-Messteilung**
Reflective measuring scale
Echelle de mesure réfléchissante

(30) Priorität: 10.03.2000 DE 10011872
(43) Veröffentlichungstag der Anmeldung: 12.09.2001
(73) Patentinhaber: Dr. Johannes Heidenhain GmbH, 83292 Traunreut (DE)
(72) Erfinder: Flatscher, Georg, 83458 Schneizlreuth (DE)

(56) Entgegenhaltungen:
- EP-A- 0 497 742
- EP-A- 0 773 458
- DE-B- 1 279 944
- US-A- 4 286 871
- PATENT ABSTRACTS OF JAPAN vol. 010, no. 206 (P-478), 18. Juli 1986 (1986-07-18) & JP 61 045923 A (ARONSHIYA:KK), 6. März 1986 (1986-03-06)

## Beschreibung

Die vorliegende Erfindung betrifft eine Reflexions-Messteilung.

Optische Auflicht-Positionsmesseinrichtungen umfassen üblicherweise eine Reflexions-Messteilung sowie eine relativ hierzu bewegliche Abtasteinheit. Auf Seiten der Abtasteinheit ist in der Regel eine Lichtquelle angeordnet, die ein Lichtbündel in Richtung der Reflexions-Messteilung emittiert. Von dort erfolgt eine Rückreflexion in Richtung der Abtasteinheit, wo das verschiebungsabhängig modulierte Lichtbündel ggf. durch ein oder mehrere Abtastteilungen tritt und schließlich von einer optoelektronischen Detektoranordnung erfaßt wird. Die derart erzeugten, verschiebungsabhängig modulierten Abtastsignale werden dann über eine nachgeordnete Auswerteeinheit weiterverarbeitet.

Bekannte Reflexions-Messteilungen, die in diesen Messeinrichtungen eingesetzt werden, bestehen in der Regel aus einem Trägersubstrat, auf dem in Messrichtung alternierend strichfömige Teilbereiche mit unterschiedlichen Reflexionseigenschaften angeordnet sind. Beispielsweise kann auf einem Stahl-Trägersubstrat eine ganzflächige Beschichtung mit Chrom vorgesehen Stahl-Trägersubstrat eine ganzflächige Beschichtung mit Chrom vorgesehen werden. Auf der Chrom-Schicht sind dann wiederum absorbierende bzw. geringreflektierende Teilbereiche aus Chromoxid Cr₂O₃ angeordnet. Die hochreflektierenden Teilbereiche werden durch die freiliegenden Chrom-Teilbereiche gebildet.

Eine weitere Reflexions-Messteilung ist aus der US 4,644,156 bekannt. Auf einem Aluminium-Trägersubstrat werden absorbierende Teilbereiche durch einen Photolack ausgebildet. Die hochreflektierenden Teilbereiche werden wiederum durch die freiliegenden Aluminium-Teilbereiche gebildet.

An derartige Reflexions-Messteilungen werden eine Reihe von Anforderungen gestellt. In diesem Zusammenhang sind u.a. eine möglichst hohe Abriebfestigkeit, eine große Reflektivität in den hochreflektierenden Teilbereichen, eine möglichst große Absorption in den geringreflektierenden Teübereichen sowie eine möglichst geringe Verschmutzungsempfindlichkeit aufzuführen. Die oben erläuterten Varianten einer Reflexions-Messteilung weist sich nunmehr als relativ verschmutzungsempfindlich. So verringert sich bei einer Verschmutzung mit Kühl- oder Schmiermitteln etwa die Reflektivität der hochreflektierenden Teilbereiche signifikant, während die Reflektivität in den geringreflektierenden Teilbereichen deutlich ansteigt. Insgesamt resultiert im Verschmutzungsfall ein deutlich verringerter Modulationsgrad der Abtastsignale, wenn diese Messteilung in einer optischen Auflicht-Positionsmesseinrichtung eingesetzt wird.

Aus der DE 1 279 944 ist zur Lösung dieser Problematik bereits vorgeschlagen worden, die geringreflektierenden Teilbereiche einer derartigen Reflexions-Messteilung als reflexvermindernde Interferenzschichten auszubilden. Die hochreflektierenden Teilbereiche werden hingegen als Gold-Schichten ausgelegt. Als nachteilig an einer derartigen Reflexions-Messteilung ist aufzuführen, dass diese lediglich über ein aufwendiges Herstellungsverfahren gefertigt werden kann. So müssen auf dem Metall-Substrat grossflächig die erforderlichen Schichtdicken der dielektrischen Interferenzschichten präzise eingestellt werden. Ferner ist insgesamt eine erhebliche Anzahl an einzelnen Teilschichten auf dem Trägersubstrat aufzubringen, was das Herstellungsverfahren zusätzlich aufwendig macht.

Aus der US 4,286,871 ist ein zweidimensionales Auflicht-Phasengitter bekannt, bei dem einzelne CeO₂-Bereiche die einfallende Strahlung reflektieren. Die reflektierenden Teilbereiche sind hierbei in unterschiedlichen Höhen angeordnet, so dass die von den verschiedenen Teilbereichen reflektierten Strahlungsanteile jeweils bestimmte Phasenunterschiede aufweisen, je nachdem ob ggf. noch phasenbeeinflussende Zwischenschichten vor und nach der Reflexion durchlaufen werden oder nicht.

Die EP 0 773 458 A1 offenbart ebenfalls ein Auflicht-Phasengitter , bei dem die verschiedenen, jeweils reflektierenden Teilbereiche jeweils eine unterschiedliche pahsenschiebende Wirkung auf die einfallende und dann reflektierte Strahlung ausüben.

In der EP 0 497 742 A1 wird eine Auflicht-Messteilung vorgeschlagen, bei der auf einem Stahlsubstrat hochreflektierende Aluminium- und SiO2schichte ganzflächig aufgebracht werden und darauf wiederum die geringreflektierenden Chromstege der Teilungsstruktur.

Aus der JP 61-045923 ist schließlich eine weitere Auflicht-Teilung bekannt, bei der auf einem Aluminium-Substrat eine ganzflächige Alumit-Schicht aufgebracht wird, über der schließlich die lichtabsorbierenden Teilungsstege in der gewünschten Struktur angeordnet werden.

Aufgabe der vorliegenden Erfindung ist es, eine Reflexions-Messteilung anzugeben, die möglichst verschmutzungsunempfindlich ist.

Diese Aufgabe wird gelöst durch eine Reflexions-Messteilung mit den Merkmalen des Anspruches 1.

Vorteilhafte Ausführungsformen der erfindungsgemäßen Reflexions-Messteilung ergeben sich aus den Maßnahmen, die in den jeweils abhängigen Ansprüchen aufgeführt sind.

Die erfindungsgemäße Reflexions-Messteilung bietet im Vergleich zu bisherigen Lösungen eine Reihe von Vorteilen. So ist zum einen sichergestellt, dass auch im Fall einer eventuellen Verschmutzung ein hoher Modulationsgrad der Abtastsignale gewährleistet bleibt, wenn eine derartige Reflexions-Messteilung in einer optischen Auflicht-Positionsmesseinrichtung eingesetzt wird. Es liegt auch im Verschmutzungsfall sowohl eine hinreichend große Reflektivität in den hochreflektierenden Teilbereichen als auch eine hinreichend hohe Absorption in den geringreflektierenden Teilbereichen der Messteilung vor.

Ferner zeichnet sich die erfindungsgemässe Reflexions-Messteilung auch durch eine hohe mechanische Belastbarkeit aus.

Ein zur Herstellung der erfindungsgemässen Reflexions-Messteüung genutzte Verfahren erfordert lediglich eine geringe Anzahl von Prozessschritten; so ist etwa lediglich ein einziger Strukturierungsschritt nötig. Ebenso ergeben sich keine verfahrenstechnisch aufwendigen Prozesse bei der Einstellung der erforderlichen Schichtdicken.

Weitere Vorteile sowie Einzelheiten der vorliegenden Erfindung ergeben sich aus der nachfolgenden Beschreibung der beiliegenden Figuren.

Dabei zeigt
- Figur 1: eine Draufsicht auf einen Teil eines Ausführungsbeispieles einer erfindungsgemäß ausgebildeten Reflexions-Messteilung;
- Figur 2: eine Schnittansicht der Messteilung aus Figur 1;
- Figur 3a -3e: jeweils ein bestimmtes Prozessstadium im Verlauf der Herstellung der erfindungsgemäßen Reflexions-Messteilung.

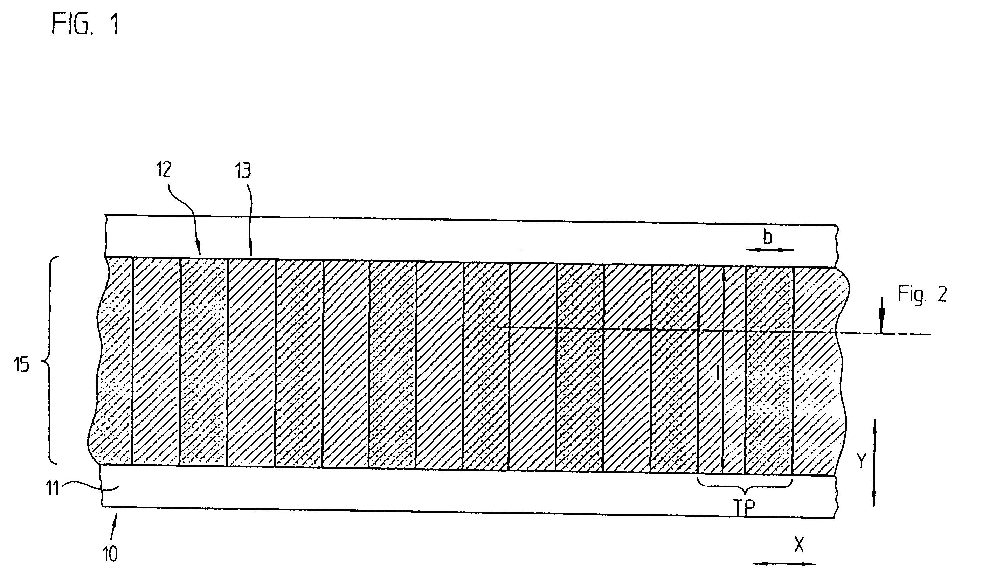

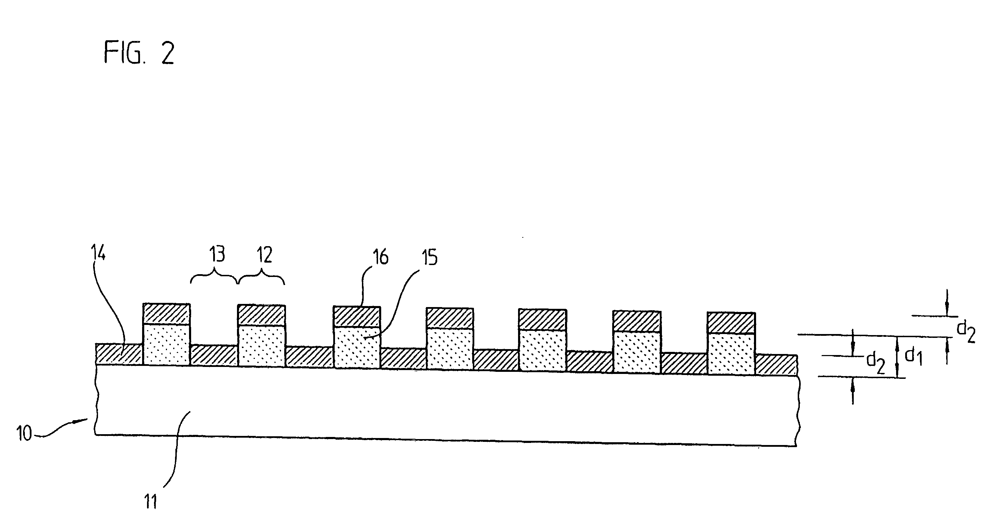

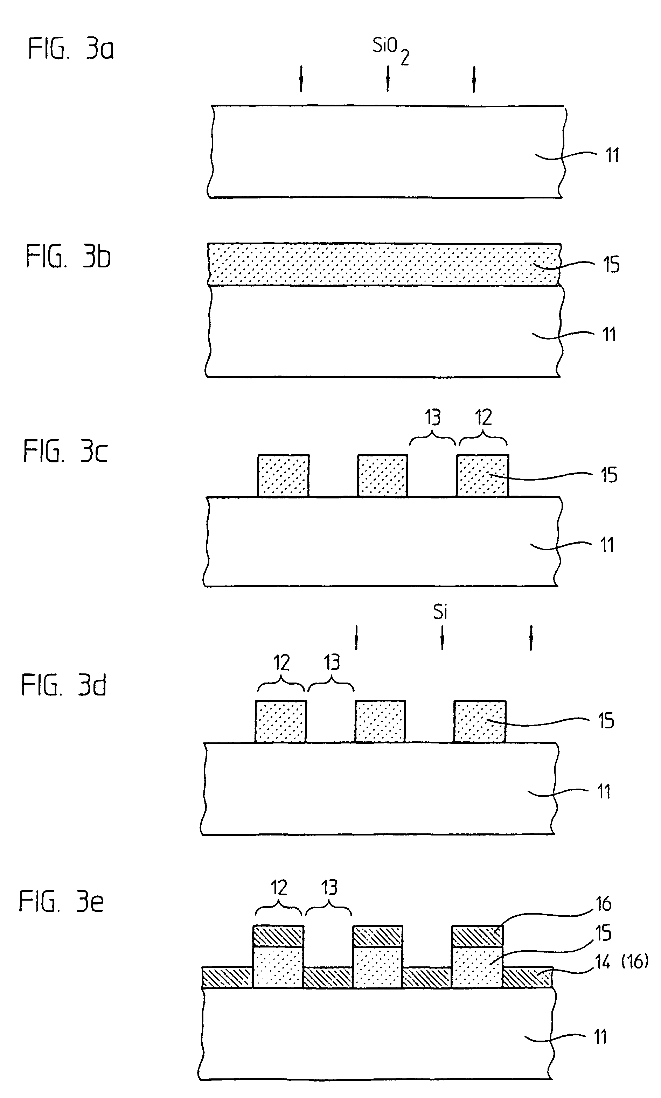

In Figur 1 ist eine Draufsicht auf einen Teil einer erfindungsgemäß ausgebildeten Reflexions-Messteilung 10 dargestellt. In diesem Ausführungsbeispiel ist die Reflexions-Messteilung 10 als lineare Inkrementalteilung ausgebildet, die aus alternierend in x-Richtung angeordneten ersten und zweiten Teilbereichen 12, 13 besteht, die in einer Spur 15 auf einem Trägersubstrat 11 angeordnet sind. Die ersten Teilbereiche 12 sind hierbei hochreflektierend ausgelegt; die zweiten Teilbereiche 13 sind geringreflektierend ausgelegt. Zur konkreten, erfindungsgemäßen Ausbildung der Teilbereiche 12, 13 sei auf die nachfolgende Beschreibung in den Figuren 2 sowie 3a -3e verwiesen.

Im dargestellten Ausführungsbeispiel einer Inkrementalteilung weisen die Teilbereiche 12, 13 mit unterschiedlichen Reflexionseigenschaften jeweils die identische geometrische Form auf und bestehen aus schmalen Rechtecken, die in x-Richtung die Breite b und in y-Richtung die Länge I besitzen. Aus der Summe der Breiten b zweier Teilbereiche 12, 13 ergibt sich die für die Auflösung einer entsprechenden inkrementalen Positionsmesseinrichtung maßgebliche Teilungsperiode TP.

Die mit x bezeichnete Richtung, entlang der die Teilbereiche 12, 13 angeordnet sind, entspricht hierbei der Messrichtung. Entlang dieser Richtung bewegt sich in einer entsprechenden Auflicht-Positionsmesseinrichtung eine - nicht dargestellte - Abtasteinheit relativ zur Reflexions-Messteilung 10.

Selbstverständlich kann die erfindungsgemäße Reflexions-Messteilung auch alternativ hierzu rotatorisch ausgebildet werden; ebenso ist es natürlich möglich, eine absolut-codierte Messteilung erfindungsgemäß auszugestalten, bei der die Teilbereiche 12, 13 unterschiedliche Breiten b in x-Richtung aufweisen usw..

Anhand der Schnittansicht von Figur 2 sei nachfolgend der Aufbau eines Ausführungsbeispieles der erfindungsgemäßen Reflexions-Messteilung 10 näher erläutert.

Als Trägersubstrat 11 der Reflexions-Messteilung 10 ist hierbei polierter Stahl vorgesehen, der eine hohe Reflektivität für die einfallende Strahlung aufweist. Übliche Dicken des Trägersubstrates 11 liegen im Bereich zwischen 1mm und 15mm. Alternativ zum gewählten Material wären grundsätzlich auch andere hochreflektierende Materialien als Trägersubstrate 11 einsetzbar, beispielsweise andere metallische Reflektoren aus Titan Ti, Wolfram W, Molybdän Mo, Platin Pt, Tantal Ta oder Chrom Cr. Bei der Materialwahl für das Trägersubstrat 11 ist neben den möglichst guten Reflexioriseigenschaften ferner zu beachten, dass dieses auch mechanisch hinreichend belastbar ist.

Die geringreflektierenden, zweiten Teilbereiche 13 der erfindungsgemäßen Reflexions-Messteilung 10 bestehen aus einer Absorberschicht 14, die unmittelbar auf dem Trägersubstrat 11 aufgebracht ist. Im dargestellten Ausführungsbeispiel ist als Material für die Absorberschicht 14 Silizium Si vorgesehen, das eine Absorptionskonstante k im Bereich zwischen k=0.1 und k=0.5 aufweist. Die Dicke d₂ der Absorberschicht 14 wird vorzugsweise im Bereich zwischen d₂=30nm und d₂=50nm gewählt. Bei einer derartigen Materialwahl bzw. Dimensionierung der Absorberschicht 14 ist sichergestellt, dass sowohl im unverschmutzten als auch im ggf. verschmutzten Zustand die zweiten Teilbereiche 13 der erfindungsgemäßen Reflexions-Messteilung 10 lediglich geringreflektierend für die einfallende Strahlung wirken. So resultiert etwa auch im verschmutzten Zustand eine Restreflexion in den zweiten Teilbereichen 13, die unter 10% liegt.

Als alternative Materialien für die Absorberschicht 14 kämen auch schwach absorbierende Metall-Oxide in Betracht.

Die hochreflektierenden, ersten Teilbereiche 12 bestehen erfindungsgemäß aus mehreren Teilschichten 15, 16 mit unterschiedlichen Brechungsindizes, die übereinander auf dem Trägersubstrat 11 angeordnet sind und als Interferenzfilter wirken. Die hochreflektierenden Teilbereiche 12 der Reflexions-Messteilung 10 sind demzufolge erfindungsgemäß als dielektrisches Reflexions-Interferenzfilter ausgebildet.

Im dargestellten Ausführungsbeispiel der Reflexions-Messteilung 10 sind hierzu zwei Teilschichten 15, 16 mit deutlich unterschiedlichen Brechungsindizes n₁, n₂ vorgesehen. Die unmittelbar auf dem Trägersubstrat 11 angeordnete Teilschicht 15 sei nachfolgend als erste Teilschicht 15 bezeichnet, die einen Brechungsindex n₁ aufweist. Die darüber angeordnete, oberste Teilschicht 16 wird nachfolgend als zweite Teilschicht 16 bezeichnet und besitzt den Brechungsindex n₂. Der Brechungsindex n₁ der ersten Teilschicht 15, die unmittelbar auf dem Trägersubstrat 11 angeordnet ist, wird hierbei deutlich kleiner gewählt als der Brechungsindex n₂ der zweiten, darüber angeordneten Teilschicht 16, um derart den gewünschten Interferenzeffekt zu erzielen.

Im dargestellten Ausführungsbeispiel wird als Material für die niedrigbrechende, erste Teilschicht 15 Siliziumdioxid SiO₂ gewählt. Die Dicke d₁ der ersten Teilschicht 15 liegt vorzugsweise im Bereich zwischen d₁=100nm und d₁=150nm. Der Brechungsindex n₁ der ersten Teilschicht 15 liegt im vorliegenden Ausführungsbeispiel im Bereich zwischen n₁=1.3 und n₁=1.7. Als alternative Materialien kämen für die erste Teilschicht 15 ferner noch Aluminiumoxid Al₂O₃ oder aber Manganfluorid MgF₂ in Betracht.

Für die hochbrechende, zweite Teilschicht 16 wird im vorliegenden Ausführungsbeispiel erfindungsgemäß Silizium Si gewählt, d.h. das identische Material wie für die Absorberschicht 14. Die Dicke d₂ der zweiten Teilschicht 16 ist ferner identisch mit der Dicke d₂ der Absorberschicht 14 und liegt demzufolge im Bereich zwischen d₂=30nm und d₂=50nm. Der Brechungsindex n₂ der zweiten Teilschicht 16 wird vorzugsweise größer oder gleich 2.2 gewählt, d.h. n₂≥2.2. Für die zweite Teilschicht 16 kommen die identischen alternativen Materialien in Betracht wie für die Absorberschicht 14, d.h. beispielsweise schwach absorbierende Metalloxide.

Aufgrund der erläuterten, erfindungsgemäßen Ausbildung der ersten, hochreflektierenden Teilbereiche 12 der Reflexions-Messteilung 10 ist sichergestellt, dass auch im Fall einer eventuellen Verschmutzung eine hinreichend hohe Reflektivität in diesen Teilbereichen 12 resultiert. So liegt auch im Fall einer Verschmutzung immer noch eine Restreflektivität von 75%-80% vor, d.h. es resultiert bei einer optischen Abtastung ein entsprechend gut moduliertes Abtastsignal.

Desweiteren gewährleistet die erfindungsgemäße Ausgestaltung der hochreflektierenden Teilbereiche 12 eine hohe mechanische Belastbarkeit.

Ein weiterer wesentlicher Vorteil im Hinblick auf die Herstellung der erfindungsgemäßen Reflexions-Messteilung 10 ergibt sich aus der Tatsache, dass für die Absorberschicht 14 und die zweite Teilschicht 16 das identische Material gewählt wird, im vorliegenden Beispiel Silizium Si. Die entsprechenden Vorteile seien im Zusammenhang mit der nachfolgenden Beschreibung eines Ausführungsbeispieles eines Verfahrens zur Herstellung einer derartigen Reflexions-Messteilung 10 anhand der Figuren 3a - 3e erläutert.

In Figur 3a ist hierbei dargestellt, wie in einem ersten Schritt des dargestellten Ausführungsbeispieles des Verfahrens auf dem Trägersubstrat 11 in Form von poliertem Stahl eine erste Teilschicht über ein PVD-Verfahren, z.B. Bedampfen oder Sputtern, flächig aufgebracht wird. Als Material der ersten Teilschicht 15, die in Figur 3b auf dem Trägersubstrat 11 gezeigt ist, ist wie oben erläutert Siliziumdioxid SiO₂ vorgesehen.

Im nächsten Verfahrensschritt wird im dargestellten Beispiel dann die flächige erste Teilschicht 15 derart strukturiert, dass lediglich in ersten Teilbereichen 12 die erste Teilschicht 15 verbleibt, während in den dazwischen liegenden zweiten Teilbereichen 13 die erste Teilschicht 15 wieder vollständig entfernt wird. Das Ergebnis dieses Strukturierungs-Schrittes zeigt Figur 3c. Eine derartige Strukturierung erfolgt mit Hilfe eines üblichen Photolithographie-Verfahrens, auf das hier nicht näher eingangen sei.

Abschließend wird ganzflächig eine zweite Teilschicht 16 gleichmäßig auf die ersten und zweiten Teilbereiche 12, 13 aufgebracht, wobei im Beispiel gemäß Figur 3d hierzu Silizium Si als Material der zweiten Teilschicht 16 aufgebracht wird. Zum ganzflächigen Aufbringen der zweiten Teilschicht 16 wird wiederum ein übliches PVD-Verfahren gewählt, etwa Bedampfen oder Sputtern.

Wie oben bereits erläutert, werden die Materialien für die verschiedenen Teilschichten 15, 16 derart im Hinblick auf ihre Brechungsindizes n₁, n₂ ausgewählt, dass im Bereich der hoch reflektierenden ersten Teilbereiche 13 ein dielektrisches Reflexions-Interferenzfilter ausgebildet wird. Der Brechungsindex n₂ der zweiten Teilschicht 16 ist hierbei deutlich größer als der Brechungsindex n₁ der ersten Teilschicht 15. Die Dicken d₁, d₂ der beiden Teilschichten 15, 16 werden wie oben bereits angegeben eingestellt. Figur 3e zeigt schließlich die fertige Reflexions-Messteilung 10.

Neben dem dargestellten Ausführungsbeispiel existieren auch alternative Varianten geeigneter Verfahren. So kann etwa das nachfolgende Vorgehen anstelle der Prozessschritte in den Figuren 3a und 3b gewählt werden, um zu einer Struktur zu kommen, wie sie in Figur 3c dargestellt ist. Hierbei wird in einem ersten Verfahrensschritt das Trägersubstrat 11 ganzflächig mit einem Photolack beschichtet. Der Photolack wird anschließend über ein Photolithographie-Verfahren strukturiert, so dass Teilbereiche auf dem Trägersubstrat 11 mit Photolack und Teilbereiche ohne Photolack resultieren, die den Teilbereichen 12, 13 in Figur 3c entsprechen. Daraufhin wird ganzflächig die erste Teilschicht 15 auf dem Trägersubstrat 11 inclusive strukturiertem Photolack aufgebracht. Im nächsten Prozessschritt werden dann diejenigen Teilbereiche entfernt, in sich denen Photolack unter der ersten Teilschicht 15 befindet, so dass die Struktur gemäß Figur 3c resultiert; anschließend wird wie oben erläutert vorgegangen.

Wie aus der vorhergehenden Beschreibung ersichtlich ist, erfordert das Verfahren zur Herstellung einer Reflexions-Messteilung lediglich wenige Prozessschritte. Im Ausführungsbeispeil der Figuren 3a-3e ist dabei nur ein einziger Strukturierungssschritt erforderlich, wenn die erste Teilschicht 15 derart strukturiert wird, dass diese lediglich in den ersten Teilbereichen 12 verbleibt. Bei diesem Strukturierungssschritt ist zudem nur das Entfernen einer relativ dünnen ersten Teilschicht 15 in den zweiten, gering reflektierenden Teilbereichen nötig. Weiterhin ist vorteilhaft, dass das Material für die oberste Teilschicht 16 der reflektierenden Teilbereiche 12 und die Absorberschicht 14 identisch ist, so dass im abschließenden Prozessschritt dieses Material einfach ganzflächig aufgebracht werden kann.

## Patentansprüche

1. Reflexions-Messteilung, bestehend aus ersten und zweiten Teilbereichen (12, 13) mit unterschiedlichen Reflexionseigenschaften, die sich in mindestens einer ersten Richtung (x) auf einem hochreflektierenden Trägersubstrat (11) erstrecken, wobei
- hochreflektierende, erste Teilbereiche (12) aus mehreren Teilschichten (15, 16) mit unterschiedlichen Brechungsindizes (n₁, n₂) auf dem Trägersubstrat (11) bestehen, die als dielektrisches Reflexions-Interferenzfilter wirken und
- geringreflektierende, zweite Teilbereiche (13) aus mindestens einer Absorberschicht (14) auf dem Trägersubstrat (11) bestehen, wobei die zweiten Teilbereiche (12) einfallende Strahlung geringer reflektieren als die ersten Teilbereiche.

2. Reflexions-Messteilung nach Anspruch 1, wobei das hochreflektierende Trägersubstrat (11) aus poliertem Stahl besteht.

3. Reflexions-Messteilung nach Anspruch 1, wobei die Absorberschicht (14) und die oberste Teilschicht (16) der hochreflektierenden, zweiten Teilbereiche (12) aus dem identischen Material bestehen.

4. Reflexions-Messteilung nach Anspruch 3, wobei als Material für die Absorberschicht (14) und die oberste Teilschicht (16) der hochreflektierenden, zweiten Teilbereiche (12) Silizium Si gewählt ist.

5. Reflexions-Messteilung nach Anspruch 3, wobei das Material für die Absorberschicht (14) und die oberste Teilschicht (16) der hochreflektierenden, zweiten Teilbereiche (12) einen Absorptionskoeffrzienten k im Bereich zwischen k=0.1 und k=0.5 aufweist.

6. Reflexions-Messteilung nach Anspruch 1, wobei die hochreflektierenden ersten Teilbereiche (12) eine erste und eine zweite Teilschicht (15, 16) umfassen, die einen deutlich unterschiedlichen Brechungsindex (n₁, n₂) aufweisen und die erste Teilschicht (15) mit dem kleinerem Brechungsindex (n₁) unmittelbar auf dem hochreflektierenden Trägersubstrat (11) angeordnet ist.

7. Reflexions-Messteilung nach Anspruch 6, wobei der Brechungsindex n₂ der zweiten Teilschicht (16) mit dem größeren Brechungsindex gemäß n₂≥2.2 gewählt ist.

8. Reflexions-Messteilung nach Anspruch 6, wobei für die zweite Teilschicht eines der folgenden Materialien gewählt ist: Silizium Si, absorbierendes Metalloxid.

9. Reflexions-Messteilung nach Anspruch 6, wobei die Dicke d₂ der zweiten Teilschicht (16) zwischen 30nm und 50nm gewählt ist.

10. Reflexions-Messteilung nach Anspruch 6, wobei der Brechungsindex n₁ der ersten Teilschicht (15) zwischen n₁=1.3 und n₂=1.7 liegt.

11. Reflexions-Messteilung nach Anspruch 6, wobei für die erste Teilschicht (15) eines der folgenden Materialien gewählt ist: SiO₂, Al₂O₃.

12. Reflexions-Messteilung nach Anspruch 6, wobei die Dicke d₁ der ersten Teilschicht (15) zwischen 100nm und 150nm gewählt ist.

## Claims

1. Reflective measuring scale comprising first and second graduated regions (12, 13) with different reflective properties, which extend in at least a first direction (x) on a highly reflective support substrate (11), wherein
• highly reflective first graduated regions (12) comprise several graduated layers (15, 16) with different refractive indexes (n₁, n₂) on the support substrate (11), which act as a dielectric reflective interference filter and
• low reflective second graduated regions (13) comprise at least one absorber layer (14) on the support substrate (11), wherein the second graduated regions (12) reflect incident radiation to a lesser degree than the first graduated regions.

2. Reflective measuring scale according to Claim 1, wherein the highly reflective support substrate (11) is made from polished steel.

3. Reflective measuring scale according to Claim 1, wherein the absorber layer (14) and the uppermost graduated layer (16) of the highly reflective second graduated regions (12) are made from identical material.

4. Reflective measuring scale according to Claim 3, wherein silicon Si is selected as material for the absorber layer (14) and the uppermost graduated layer (16) of the highly reflective second graduated regions (12).

5. Reflective measuring scale according to Claim 3, wherein the material for the absorber layer (14) and the uppermost graduated layer (16) of the highly reflective second graduated regions (12) has an absorption coefficient k in the range of between k=0.1 and k=0.5.

6. Reflective measuring scale according to Claim 1, wherein the highly reflective first graduated regions (12) comprise a first and a second graduated layer (15, 16), which have a clearly different refractive index (n₁, n₂), and the first graduated layer (15) with the lower refractive index (n₁) is arranged directly on the highly reflective support substrate (11).

7. Reflective measuring scale according to Claim 6, wherein the refractive index n₂ of the second graduated layer (16) is selected to be the higher refractive index in accordance with n₂ ≥ 2.2.

8. Reflective measuring scale according to Claim 6, wherein one of the following materials is selected for the second graduated layer: silicon Si, absorbent metal oxide.

9. Reflective measuring scale according to Claim 6, wherein the thickness d₂ of the second graduated layer (16) is selected to be between 30 nm and 50 nm.

10. Reflective measuring scale according to Claim 6, wherein the refractive index n₁ of the first graduated layer (15) lies between n₁=1.3 and n₂=1.7.

11. Reflective measuring scale according to Claim 6, wherein one of the following materials is selected for the first graduated layer (15): SiO₂, Al₂O₃.

12. Reflective measuring scale according to Claim 6, wherein the thickness d₁ of the first graduated layer (15) is selected to be between 100 nm and 150 nm.

## Revendications

1. Graduation de mesure réfléchissante comprenant des première et deuxième zones de division (12, 13) avec des propriétés réfléchissantes différentes, qui s'étendent dans au moins une première direction (x) sur un substrat support (11) fortement réfléchissant, dans laquelle
• des premières zones de division (12) ) fortement réfléchissantes sont' formées de plusieurs couches de division (15, 16) avec des indices de réfraction (n₁, n₂) différents sur le substrat support (11), qui se comportent en filtres d'interférence à réflexion diélectriques et
• des deuxièmes zones de division (13) faiblement réfléchissantes sont formées d'au moins une couche absorbante (14) sur le substrat support (11), les deuxièmes zones de division (13) réfléchissant le rayonnement incident plus faiblement que les premières zones de division.

2. Graduation de mesure réfléchissante selon la revendication 1, dans laquelle le substrat support (11) fortement réfléchissant est en acier poli.

3. Graduation de mesure réfléchissante selon la revendication 1, dans laquelle la couche absorbante (14) et la couche de division (16) supérieure des deuxièmes zones de division (12) fortement réfléchissantes sont en un matériau identique.

4. Graduation de mesure réfléchissante selon la revendication 3, dans laquelle le matériau pour la couche absorbante (14) et la couche de division (16) supérieure des deuxièmes zones de division (12) fortement réfléchissante est du silicium Si.

5. Graduation de mesure réfléchissante selon la revendication 3, dans laquelle le matériau pour la couche absorbante (14) et la couche de division (16) supérieure des deuxièmes zones de division (12) fortement réfléchissantes présente un coefficient d'absorption k compris dans la plage allant de k=0,1 à k=0,5.

6. Graduation de mesure réfléchissante selon la revendication 1, dans laquelle les premières zones de division (12) fortement réfléchissantes comprennent une première et une deuxième couches de division (15, 16) qui présentent des indices de réfraction (n₁, n₂) nettement différents et la première couche de division (15), avec l'indice de réfraction (n₁) plus faible, est disposée directement sur le substrat support (11) fortement réfléchissant.

7. Graduation de mesure réfléchissante selon la revendication 6, dans laquelle l'indice de réfraction (n₂) de la deuxième couche de division (16) à indice de réfraction plus grand est choisi conformément à n₂≥2,2.

8. Graduation de mesure réfléchissante selon la revendication 6, dans laquelle on sélectionne pour la deuxième couche de division l'un des matériaux suivants : silicium Si, oxyde métallique absorbant.

9. Graduation de mesure réfléchissante selon la revendication 6, dans laquelle l'épaisseur (d₂) de la deuxième couche de division (16) est choisie entre 30 nm et 50 nm.

10. Graduation de mesure réfléchissante selon la revendication 6, dans laquelle l'indice de réfraction (n₁) de la première couche de division (15) est compris entre n₁=1,3 et n₁=1,7.

11. Graduation de mesure réfléchissante selon la revendication 6, dans laquelle on sélectionne pour la première couche de division (15) l'un des matériaux suivants : SiO₂, Al₂O₃.

12. Graduation de mesure réfléchissante selon la revendication 6, dans laquelle l'épaisseur (d₁) de la première couche de division (15) est choisie entre 100 nm et 150 nm.
